# EUROPÄISCHE PATENTSCHRIFT

(11) **EP 0 816 563 B1**
(45) Veröffentlichungstag und Bekanntmachung des Hinweises auf die Patenterteilung: **22.03.2000**
(21) Anmeldenummer: 97110290.0
(22) Anmeldetag: 24.06.1997
(51) Int. Cl.: E01B 21/00, E01B 19/00, E01C 9/06, C08L 19/00

(54) **Kammerfüllelement für Schienengleise**
Filling element for railway track
Elément de remplissage pour voie de chemin de fer

(30) Priorität: 26.06.1996 DE 29611164 U
(43) Veröffentlichungstag der Anmeldung: 07.01.1998
(73) Patentinhaber: sedra Asphalt-Technik Biebrich GmbH, 65080 Wiesbaden (DE)
(72) Erfinder: Eilmes, Horst, Dr., 65232 Taunusstein (DE); Frottier, Jean-Pierre, 65193 Wiesbaden (DE)
(74) Vertreter: Blumbach, Kramer & Partner GbR

(56) Entgegenhaltungen:
- DE-A- 4 004 208
- DE-U- 9 420 123
- DE-U- 9 420 124
- US-A- 4 871 809

## Beschreibung

Es gibt Schienengleise ohne eigenen Bahnkörper, insbesondere als Straßenbahnschienen, die in einer existierenden Straße verlegt sind. Diese Straßenbahnschienen weisen Kammern auf, die mit sogenannten Kammerfüll-"Steinen" gefüllt sind. Solche Kammerfüllsteine bestehen neuerdings auch aus recyceltem Gummi, vornehmlich aus Altreifen (DE 40 04 208), welche gute schwingungsdämpfende und -dämmende Eigenschaften aufweisen.

Der Erfindung liegt die Aufgabe zugrunde, Kammerfüllelemente bereitzustellen, die im eingebauten Zustand ein wirksames Teil der elektrischen Isolierung der Schienen darstellen können.

Die gestellte Aufgabe wird aufgrund der Merkmale des Hauptanspruchs gelöst und durch die weiteren Merkmale der Unteransprüche ausgestaltet und weiterentwickelt.

Im einzelnen wird vorwiegend rußfreier, zerkleinerter Altgummi verwendet, um einen möglichst hohen spezifischen elektrischen Durchgangswiderstand zu erzielen, ferner auch Kautschukgummi, um einen passenden Härtegrad des Kammerfüllelements zu erzielen und die Porosität herabzusetzen. Die Gummibestandteile liegen in granulierter Form vor und werden durch das Polyurethan miteinander verklebt. Aus Kostengründen wird möglichst wenig Polyurethan verwendet, und die gleichen Gründe gelten auch für den Einsatz des Kautschukgummis oder Naturgummis. Gummigranulat aus recycelten Altreifen steht in großer Menge zur Verfügung; dieses Material enthält jedoch Ruß und soll der Herstellungsmischung nur beschränkt zugesetzt werden. Gummi aus Schuhsohlenabfällen hat einen hohen elektrischen Isolationswert, jedoch sind mit diesem Material hergestellte Kammerfüllelemente porös, so daß die Isolationswirkung im eingebauten Zustand bei Feuchtigkeit mangelhaft ist. Durch den Zusatz von Industriegummi und vor allem dem Kautschukgummi (Naturgummi) lassen sich die Kammerfüllelemente auch mit wenig Polyurethan weitgehend porenfrei (wasserdicht) herstellen, so daß der erforderliche elektrische Isolationswert auch im praktischen Betrieb erzielt werden kann. Es wird darauf hingewiesen, daß das angegebene Mischungsverhältnis zu einem Kammerfüllelement führt, welches dauerhaft mit den Schienen verklebt werden kann, was zur Beibehaltung der elektrischen Isolationsfestigkeit wichtig ist.

Nachfolgend wird ein Ausführungsbeispiel beschrieben. Für die Herstellung des Kammerfüllelementes wurde folgende Zusammensetzung gewählt:

| Material | Körnung (mm) | Gew.% | spez.Durchgangswiderstand (Ωm) |
|---|---|---|---|
| Synthetischer Kautschuk als Abfall von Kabelgummi und Turnschuhen | 0,5 - 4,0 | 24 | 10¹² - 10¹⁴ |
| | | | |
| Industriegummi als Abfall von Lager, Dichtungen, Abstandshaltern | 1,0 - 8,0 | 48 | 10⁷ - 10¹⁴ |
| | | | |
| Recycelter Gummi aus Altreifen | 2,0 - 10,0 | 12 | 10³ - 3.10³ |
| | | | |
| Kautschukgummi (Naturgummi) | 0,5 - 8,0 | 6 | 10¹⁰ - 10¹⁴ |
| | | | |
| Polyurethan als Binder | - | 10 | 10⁹ - 10¹² |

Die Zusammensetzung wird innig gemischt und in geeigneten Formen unter hohem Druck und Hitze bei etwa 60 bis 70°C während 5 bis 10 Minuten verpreßt, um daraus Formkörper zu erhalten, welche die Kammerfüllelemente darstellen. Mögliche Formen sind in DE-C 40 04 208 sowie DE-U 94 20 123 und 94 20 124 beschrieben.

Die Formfüllkörper mit der angegebenen Mischung erzielen nach Labormessungen folgende spezifische Widerstände:

| | |
|---|---|
| trocken | ca. 3 . 10⁸ ... 3 . . 10⁹ Ωm |
| nach 48 Stunden Lagerung in NaCl-Lösung | ca. 4,5 ... 6,5 . 10⁵ Ωm. |

Mit diesen spezifischen Widerständen ist bei Rillenschienen Ri 60 ein Ableitungsbetrag von G' = 0,021 S/km errechenbar. Dieser Wert liegt deutlich unter dem aus Streustrom-Korrosionsschutzgründen geforderten Wert von G' ≤ 1 S/km.

Zum Vergleich: Bei Verwendung von Reifengummi allein (mit Polyurethan als Binder) für die Kammerfüllkörper ergeben sich folgende Werte:

| | |
|---|---|
| trocken | ca. 2700 Ωm |
| naß | ca. 2100 Ωm. |

Je nach den zur Verfügung stehenden Grundmaterialien kann von der angegebenen Zusammensetzung abgewichen werden. Der synthetische Kautschuk aus Abfällen von Kabelgummi ist zur elektrischen Isolierung besonders geeignet, weshalb Kammerfüllkörper aus solchem Material allein oder mit Naturgummizusätzen (mit Polyurethan als Binder) hergestellt werden, falls Kabelgummiabfall in genügender Menge zur Verfügung steht.

Es gibt Bezugsquellen von synthetischem Kautschuk mit Mischungen von Kabelabfällen und Turnschuhabfällen (Schuhsohlenabfällen), wobei die Turnschuhabfälle aus geschäumtem Material bestehen. Aus solchem Material hergestellte Formkörper sind in der Praxis porös, weil Polyurethan nach 10 Minuten noch nicht so weit ausgehärtet ist, daß es intensiv verpreßtes, geschäumtes Material zusammenhält, d. h. unter praktischen Herstellungsbedingungen kann man geschäumtes Material nicht mit hohem Druck verpressen, um Porenfreiheit zu erzielen. (Man müßte solche Kammerfüllelemente wenigstens einen halben Tag in ihren Formen unter Druck aushärten lassen, damit nach Druckentlastung die innere Spannung der geschäumten Partikel das Element nicht auseinanderreißt.) Deshalb ist der Anteil der Mischung Kabelgummi/Turnschuhabfall auf 20 bis 30 % beschränkt worden.

Gummigranulat aus Industriegummi ist in unterschiedlichen Weichheitsgraden der einzelnen Partikel verfügbar, wobei man durch entsprechende Mischung von Partikeln aus unterschiedlichen Quellen zu einer Zusammensetzung gelangen kann, welche die erwünschte Shore-Härte erzeugt. Deshalb wird ein relativ hoher Anteil von 45 bis 50 Gew.% dieses Materials angewendet.

Recycelter Gummi aus Altreifen steht in großer Menge zur Verfügung, weswegen das Bestreben vorhanden ist, solches Material einzusetzen. Es hat außerdem einen günstigen Härtegrad und erzeugt relativ porenfreie Füllkörper. Das Material hat jedoch nicht die gewünschte elektrische Isolationsfähigkeit und kann deshalb nur im Bereich bis zu 12 bis 20 % eingesetzt werden.

Mit dem zugesetzten Kautschukgummi oder Naturgummi kann ebenfalls die erwünschte Härte des Kammerfüllelements eingestellt werden; auch ist das Material im Hinblick auf Porenfreiheit des Formkörpers günstig. Man setzt dieses Material in einer Menge von etwa 5 bis 10 % ein.

Kammerfülleelemente mit obiger Zusammensetzung werden um die Schienen herum eingebaut, die elektrisch isoliert werden sollen, um Streuströme in den Untergrund zu vermeiden. Die Kammerfüllelemente sind entsprechend den Umrissen der Schiene hergestellt, die sie bedecken sollen, und weisen genügende Biegsamkeit auf, um sich diesen sogenannten Kammern anzuschmiegen, auch wenn die Schiene eine gewisse Krümmung zeigt. Nach Verkleben mit der Schiene wird ein dichter Verbund erzeugt, der wasserdicht ist, so daß die Isolationsfähigkeit des Kammerfüllelements nicht durch Feuchtigkeit in Frage gestellt wird.

## Patentansprüche

1. Kammerfüllelement für Schienengleise,
gekennzeichnet durch weitgehende Porenfreiheit und einen spezifischen elektrischen Durchgangswiderstand nach Füllung der Restporen mit Salzlösung in der Größenordnung von 10⁵ Ωm und darüber.

2. Kammerfüllelement nach Anspruch 1,
dadurch gekennzeichnet, daß das Kammerfüllelement im trockenen Zustand einen spezifischen Durchgangswiderstand in der Größenordnung von wenigstens 10⁷ Ωm aufweist.

3. Kammerfüllelement nach Anspruch 1 oder 2,
dadurch gekennzeichnet, daß das Kammerfüllelement im trockenen Zustand einen spezifischen Widerstand in der Größenordnung von 3 . 10⁸ bis 3 . 10⁹ Ωm und im feuchten Zustand von 4,5 bis 6,5 . 10⁵ Ωm aufweist.

4. Kammerfüllelement nach einem der Ansprüche 1 bis 3,
gekennzeichnet durch folgende Zusammensetzung:
| | |
|---|---|
| 75 - 90 Gew.% | zerkleinerter Altgummi, darunter wenigstens 65 - 80 Gew.% aus Abfällen von Kabeln, Turnschuhen (synthetischer Kautschuk), Lager, Dichtungen und/oder Abstandshaltern (Industriegummi); |
| 5 - 10 Gew.% | granulierter Kautschukgummi (Naturgummi); |
| 5 - 15 Gew.% | Polyurethan als Bindemittel. |

5. Kammerfüllelement nach Anspruch 4 ,
dadurch gekennzeichnet, daß die Zusammensetzung bis etwa 12 - 20 Gew.% Gummigranulat aus recycelten Altreifen enthält.

6. Kammerfüllelement nach Anspruch 4 oder 5,
dadurch gekennzeichnet, daß der synthetische Kautschuk einen Anteil von 20 - 30 Gew.% und der Industriegummi einen Anteil von 45 - 50 Gew.% ausmacht.

7. Kammerfüllelement nach einem der Ansprüche 4 bis 6,
gekennzeichnet durch folgende Zusammensetzung der Kautschuk/Gummi-Anteile ohne Bindemittel:
| | |
|---|---|
| 27 % | synthetischer Kautschuk |
| 13 % | recycleter Gummi/Altreifen |
| 53 % | Gummigranulat aus Industriegummi |
| 7 % | Kautschukgummi. |

8. Kammerfüllelement nach einem der Ansprüche 4 bis 7,
dadurch gekennzeichnet, daß die Teile vor der Verarbeitung folgende Stückigkeit aufweisen:
| | |
|---|---|
| synthetischer Kautschuk | 0,5 bis 4,0 mm |
| Industrigummi | 1,0 bis 8,0 mm |
| Altreifen | 2,0 bis 10,0 mm |
| Kautschukgummi | 0,5 bis 8,0 mm. |

9. Kammerfüllelement nach einem der Ansprüche 1 bis 8,
gekennzeichnet durch eine Shore-Härte A von etwa 80.

## Claims

1. A chamber filler element for rail tracks, characterised by substantial freedom from pores and an electric volume resistivity after filling of the residual pores with salt solution of the order of 10⁵ Ωm and above.

2. A chamber filler element according to claim 1, characterised in that the chamber filler element in the dry state has a volume resistivity of the order of at least 10⁷ Ωm.

3. A chamber filler element according to claim 1 or 2, characterised in that the chamber filler element in the dry state has a resistivity of the order of 3 . 10⁸ to 3 . 10⁹ Ωm and in the wet state 4.5 to 6.5 . 10⁵ Ωm.

4. A chamber filler element according to any one of claims 1 to 3, characterised by the following composition:
| | |
|---|---|
| 75 - 90% by weight | comminuted scrap rubber, including at least 65 to 80% by weight of waste from cables, trainers (synthetic rubber), bearings, seals and/or spacers (industrial vulcanised rubber); |
| 5 - 10% by weight | granulated unvulcanised rubber (natural rubber); |
| 5 - 15% by weight | polyurethane as binder. |

5. A chamber filler element according to claim 4, characterised in that the composition contains up to about 12 - 20% by weight of vulcanised rubber granulate from recycled scrap tyres.

6. A chamber filler element according to claim 4 or 5, characterised in that the synthetic rubber is in a proportion of 20 to 30% by weight and the industrial vulcanised rubber a proportion of 45 to 50% by weight.

7. A chamber filler element according to any one of claims 4 to 6, characterised by the following composition of the unvulcanised/vulcanised rubber proportions without binder:
| | |
|---|---|
| 27% | synthetic rubber |
| 13% | recycled vulcanised rubber/scrap tyres |
| 53% | industrial vulcanised rubber granulate |
| 7% | unvulcanised rubber. |

8. A chamber filler element according to any one of claims 4 to 7, characterised in that before processing the lump sizes of the parts are as follows:
| | |
|---|---|
| synthetic rubber | 0.5 to 4.0 mm |
| industrial vulcanised | 1.0 to 8.0 mm |
| rubber scrap tyres | 2.0 to 10.0 mm |
| unvulcanised rubber | 0.5 to 8.0 mm |

9. A chamber filler element according to one of claims 1 to 8, characterised by a Shore hardness A of about 80.

## Revendications

1. Elément de remplissage de chambre pour voie ferrée, caractérisé par une grande absence de porosité et une résistance électrique interne spécifique après remplissage des pores résiduels avec une solution salée de l'ordre de grandeur de 10⁵ Ωm et plus.

2. Elément de remplissage de chambre selon la revendication 1, caractérisé en ce que l'élément de remplissage de chambre présente à l'état sec une résistance interne spécifique de l'ordre de grandeur au moins égal à 10⁷ Ωm.

3. Elément de remplissage de chambre selon la revendication 1 ou 2, caractérisé en ce que l'élément de remplissage de chambre présente à l'état sec une résistance interne spécifique de l'ordre de grandeur compris entre 3.10⁸ et 3.10⁹ Ωm et une résistance à l'état humide comprise entre 4,5 et 6,5 . 10⁵ Ωm.

4. Elément de remplissage selon l'une des revendications 1 à 3, caractérisé par la composition suivante :
| | |
|---|---|
| 75 à 90 % en masse | de caoutchouc de récupération déchiqueté, dont au moins 65 à 80 % en masse de déchets de câbles, chaussures de sport (caoutchouc synthétique), paliers, joints et/ou écarteurs (caoutchouc industriel) ; |
| 5 à 10 % en masse | de caoutchouc naturel en granulés ; |
| 5 à 15 % en masse | de polyuréthane en tant que liant. |

5. Elément de remplissage de chambre selon la revendication 4, caractérisé en ce que la composition contient jusqu'à environ 12 à 20 % en masse de granulés de caoutchouc issus de pneus de récupération recyclés.

6. Elément de remplissage de chambre selon la revendication 4 ou 5, caractérisé en ce que le caoutchouc synthétique forme une proportion comprise entre 20 et 30 % en masse et le caoutchouc industriel forme une proportion comprise entre 45 et 50 % en masse.

7. Elément de remplissage de chambre selon l'une des revendications 4 à 6, caractérisé par la composition suivante des proportions de caoutchouc/caoutchouc naturel sans liant :
| | |
|---|---|
| 27 % | de caoutchouc synthétique |
| 13 % | de caoutchouc recyclé/ pneus de récupération |
| 53 % | de granulés de caoutchouc issus du caoutchouc industriel |
| 7 % | de caoutchouc naturel. |

8. Elément de remplissage de chambre selon l'une des revendications 4 à 7, caractérisé en ce que les éléments présentent avant le traitement la taille suivante :
| | |
|---|---|
| Caoutchouc synthétique | 0,5 à 4,0 mm |
| Caoutchouc industriel | 1,0 à 8,0 mm |
| Pneus de récupération | 2,0 à 10,0 mm |
| Caoutchouc naturel | 0,5 à 8,0 mm |

9. Elément de remplissage de chambre selon l'une des revendications 1 à 8, caractérisé par une dureté Shore A égale à environ 80.
